# EUROPÄISCHE PATENTSCHRIFT

(11) **EP 0 631 923 B1**
(45) Veröffentlichungstag und Bekanntmachung des Hinweises auf die Patenterteilung: **08.01.1997**
(21) Anmeldenummer: 94103303.7
(22) Anmeldetag: 04.03.1994
(51) Int. Cl.: B62D 25/20

(54) **Verschlussdeckel**
Closure cap
Bouchon

(30) Priorität: 30.06.1993 DE 4321781; 19.08.1993 DE 4327945
(43) Veröffentlichungstag der Anmeldung: 04.01.1995
(73) Patentinhaber: TRW United-Carr GmbH & Co. KG, D-67677 Enkenbach-Alsenborn (DE)
(72) Erfinder: Kraus, Willibald, D-67269 Grünstadt/Wstr. (DE)
(74) Vertreter: Eder, Thomas, Dr.-Ing.

(56) Entgegenhaltungen:
- DE-A- 2 144 359
- DE-A- 4 233 472
- DE-U- 8 802 422
- FR-A- 2 507 277
- US-A- 4 784 285

## Beschreibung

Die Erfindung bezieht sich auf einen Verschlußdeckel zum dichten Abschluß einer Öffnung in einer Trägerplatte, insbesondere einer Kraftfahrzeugkarosserie gemäß dem Oberbegriff des Anspruchs 1.

Ein gattungsgemäßer Verschlußdeckel ist aus der DE-U-8 802 442 bekannt. Der darin offenbarte Kunststoffstopfen besteht aus einem tellerförmigen Teil, welches aus einem sehr harten Kunststoff hergestellt ist, und einem umlaufenden Dichtungsabschnitt mit einer einstückig ausgebildeten Abdeckhaut oder -platte. Dieser Dichtungsabschnitt ist aus einem weichen gummielastischen Kunststoff angefertigt. Beide Kunststoffteile werden in einem entsprechenden Werkzeug gleichzeitig gespritzt, wobei die zwei Kunststoffe eine feste Verbindung eingehen.

Ein weiterer Verschlußdeckel ist bekannt (DE 34 27 626 C1), welcher zum dichten Abschluß einer Öffnung, insbesondere in einer Kraftfahrzeugkarosserie dient. Hierbei ist an dem Deckelteil mechanisch und/oder durch chemische Oberflächenhaftung ein Schmelzteil angeordnet, dessen Material sich in einem bestimmten Hitzebereich mit der Trägerplatte und dem Deckelteil verbindet.

Ein weiterer bekannter Verschlußdeckel (DE 38 17 896 C2) ist aus einem einzigen Kunststoffmaterial hergestellt und besteht aus einem Bodenteil, an welches sich eine gegen die Oberseite eines Trägers anlegende Dichtlippe und ein dieser gegenüberliegender, sich gegen die Unterseite des Trägers legender dichtender Rastring anschließt. Einen ähnlichen Aufbau weist ein Verschlußdeckel auf (DE 35 12 582 A1), bei welchem das Kunststoffdeckelteil napfartig eingezogen ist und an den Außenseiten eine kegelscheibenähnliche Lippe besitzt, welche mit einem halbkreisförmig gewölbten Kragen zusammenwirkt. Bei einer anderen Konstruktion (GB 1 354 973) ist der Rastring im Querschnitt etwa dreieckförmig ausgebildet und der Kragen weist zwei in etwa parallel verlaufende Außenflächen auf.

Weitere bekannte Konstruktionen von Verschlußdeckeln sind zweistückig ausgebildet (DE-OS 30 11 448) bzw. so gestaltet, daß an den Flansch und an den Rastring jeweils noch eine schmale Dichtlippe anschließt (DE 39 17 407 A1).

Alle diese bekannten Verschlußdeckel dienen im wesentlichen dazu, die Öffnung eines Trägers, insbesondere in einer Kraftfahrzeugkarosserie abzudichten.

Der vorliegenden Erfindung liegt die Aufgabe zugrunde, bei einfacher konstruktiver Ausbildung die Dichtwirkung derartiger bekannter Verschlußdeckel zu verbessern.

Diese Aufgabe wird erfindungsgemäß mit den Merkmalen des Anspruchs 1 gelöst.

Die aus flexiblem oder klebenden Material bestehende Schalenkomponente ist in der Lage, bei einer bestimmten Temperaturbeeinflussung mit dem Träger eine Klebeverbindung einzugehen, wodurch vorteilhafterweise bei einfachem Aufbau des Verschlußdeckels eine absolute Wasserdichtigkeit beim Verschließen von Öffnungen erzielt wird.

Andererseits wird durch die Kernkomponente eine hohe Stabilität des erfindungsgemäßen Verschlußdeckels erzielt.

In weiterer Ausgestaltung der Erfindung kann der Verschlußdeckel mit einer das Deckelteil begrenzenden Dichtlippe versehen sein, wobei die Dichtlippe aus der Schalenkomponente besteht. Weiterhin kann der Verschlußdeckel mit einem an das Deckelteil anschließenden, ringförmigen, die Trägeröffnung durchsetzenden Flansch aufweisen, welcher einen die Trägeröffnung hintergreifenden Rastring besitzt. Der Rastring kann aus der Kernkomponente und aus der Schalenkomponente bestehen, so daß die gewünschte Stabilität bei gleichzeitiger Flexibilität erzeugt wird.

In einer Ausgestaltung der Erfindung kann das Deckelteil napfartig ausgebildet sein und an den Außenrändern in den Flansch mit Rastring übergehen, wobei der Flansch endseitig durch die Dichtlippe begrenzt ist. Alternativ besteht auch die Möglichkeit, daß unterhalb des Deckelteils der Flansch mit Rastring anschließt.

Erfindungsgemäß besteht die Möglichkeit, daß die Schalenkomponente die Kernkomponente vollkommen umschließt. Alternativ ist auch eine Bauform einsetzbar, bei welcher die Schalenkomponente die Kernkomponente nur teilweise umschließt, und zwar vornehmlich im Bereich des Außenrandes, welcher in die umlaufende dichte Lippe übergeht.

Der erfindungsgemäße Verschlußdeckel kann durch Herstellung von Kernkomponente und Schalenkomponente im Zweikomponenten-Spritzverfahren kostengünstig hergestellt werden.

Erfindungsgemäß besteht darüber hinaus die Möglichkeit, daß die Kernkomponente eine zylindermantelförmige Wand aufweist, an deren Außenfläche über den Umfang verteilte Eingriffselemente angeordnet sind. Diese Eingriffselemente können als schräg angeordnete Flügel ausgebildet sein, welche beispielsweise jeweils Dreieckform aufweisen.

Weiterhin können die Flügel über den gesamten Außenumfang der zylindermantelförmigen Wand in einer Richtung schräg verlaufen. Es besteht jedoch auch die Möglichkeit, daß jeweils zwei Flügel zueinander geneigt sind oder daß jeweils Flügel eines Quadranten der zylindermantelförmigen Wand in anderer Richtung geneigt sind als die Flügel benachbarter Quadranten. Diese Flügel können entweder schalenförmig ausgebildet sein oder parallel verlaufende Außenkonturen aufweisen.

Die Flügel bewirken eine gute Halterung des Verschlußdeckels, insbesondere in einem Kragenloch, mit zuverlässigem Toleranzausgleich.

Die Erfindung wird nachfolgend anhand von in der Zeichnung dargestellten Ausführungsbeispielen näher beschrieben. In der Zeichnung zeigen:
- Fig. 1: einen Schnitt durch einen Verschlußdeckel mit napfartig eingezogenem Deckelteil;
- Fig. 2: eine andere Ausführungsform des Verschlußdeckels, teils geschnitten und gebrochen;
- Fig. 3: eine weitere Ausführungsform des Verschlußdeckels, teils geschnitten und gebrochen.
- Fig. 4: eine andere Ausführungsmöglichkeit der Erfindung, teils in Seitenansicht, teils geschnitten.

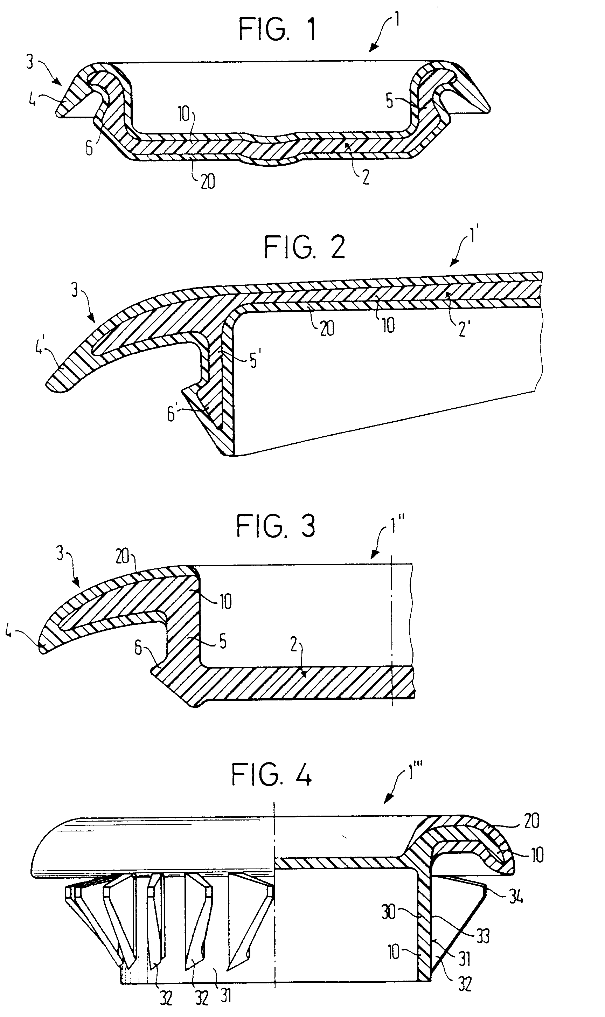

Der in Fig. 1 dargestellte Verschlußdeckel 1 besteht im wesentlichen aus einem Deckelteil 2 und einem Außenrand 3, welcher in eine umlaufende Dichtlippe 4 übergeht. Wie dargestellt, finden hier zwei Komponenten Anwendung, nämlich eine Kernkomponente 10 aus einem harten Material und eine Schalenkomponente 20 aus einem weicheren, die Kernkomponente 10 umschließenden Material, welches an dem umlaufenden Außenrand 3 mit einer nicht näher dargestellten Trägerplatte verklebbar ist. Das Deckelteil 2 ist napfartig ausgebildet und geht an den Außenrändern in einen Flansch 5 über, welcher mit einem umlaufenden Rastring 6 versehen ist. Dieser Rastring 6 besteht aus Kernkomponente 10 und aus Schalenkomponente 20. Weiterhin ist der Flansch 5 endseitig durch die Dichtlippe 4 begrenzt, welche den Außenrand 3 des Verschlußdeckels 1 bildet.

Der Rastring 6 liegt in etwa dem Außenring 3, d.h. der Dichtlippe 4, gegenüber, so daß zwischen diesen beiden Bereichen die Oberseite und die Unterseite einer nicht näher dargestellten Trägerplatte eingeschlossen sind. Die Dichtlippe 4 beaufschlagt hierbei die Oberseite der Trägerplatte und wird bei einer bestimmten Temperatur mit der Trägerplatte verklebt, wodurch sich eine absolute Wasserdichtigkeit ergibt.

Durch die Einwirkung des Rastrings 6 auf die Unterseite der Trägerplatte wird der Verschlußdeckel 1 einwandfrei axial gesichert und kann nicht in unerwünschter Weise aus der Trägerplatte herausgezogen oder herausgedrückt werden.

Die Ausführungsform nach Fig. 2 ist so gestaltet, daß der Verschlußdeckel 1' ein Deckelteil 2' aufweist, an welches sich ein Flansch 5' aufweist, der mit dem Rastring 6' versehen ist. Wiederum besteht der Verschlußdeckel 1' aus der Kernkomponente 10 aus hartem Material und der Schalenkomponente 20 aus einem weicheren, die Kernkomponente 10 umschließenden Material.

Das Deckelteil 2' geht analog der Ausführungsform nach Fig. 1 in den Außenrand 3 über, welcher die Dichtlippe 4' bildet. Zwischen dieser Dichtlippe 4' und dem Rastring 6' wird der erfindungsgemäße Verschlußdeckel 1' innerhalb einer nicht näher dargestellten Trägeröffnung festgeklemmt, wonach unter Einwirkung einer bestimmten Temperatur die Dichtlippe 4' mit dem Träger eine Klebeverbindung eingeht. Hierdurch wird wiederum eine absolute Wasserdichtigkeit erzielt.

Während bei den Ausführungsformen nach Fig. 1 und 2 die Schalenkomponente 20 die Kernkomponente 10 vollkommen umschlossen hat, besteht nach Fig. 3 auch die Möglichkeit, den Verschlußdeckel 1'' so zu gestalten, daß die Schalenkomponente 20 die Kernkomponente 10 nur teilweise umschließt. Bei dieser Ausführungsform findet wiederum ein Deckelteil 2 und ein Außenrand 3 Anwendung, welcher in die umlaufende Dichtlippe 4 übergeht. Im Bereich dieser umlaufenden Dichtlippe umschließt die Schalenkomponente 20 die Kernkomponente 10. Der Flansch 5 und der Rastring 6 bestehen demgegenüber lediglich aus der Kernkomponente 10, d.h. aus einem harten Kunststoffmaterial.

Gemäß Fig. 4 besteht auch die Möglichkeit, daß der Verschlußdeckel 1''' so gestaltet ist, daß die Kernkomponente 10 eine zylindermantelförmige Wand 30 aufweist, an deren Außenfläche 31 über den Umfang verteilte Eingriffselemente 32 angeordnet sind. Diese Eingriffselemente 32 sind vorzugsweise als schräg angeordnete Flügel gestaltet. Die Flügel 32 können über einen Teilbereich im spitzen Winkel zu Radiallinien der zylindermantelförmigen Wand 30 verlaufen.

Jeder Flügel 32 kann dreieckförmig ausgebildet sein, wobei eine Dreieckseite als innerer Endbereich 33 mit der Außenfläche der zylindermantelförmigen Wand 30 verbunden ist und die gegenüberliegende Dreieckspitze den äußeren Endbereich 34 bildet.

Weiterhin können, wie aus Fig. 4 ersichtlich, die Flügel 32 über den gesamten Außenumfang der zylindermantelförmigen Wand 30 in einer Richtung schräg angeordnet sein. In nicht näher dargestellter Ausführungsform besteht auch die Möglichkeit, daß jeweils zwei Flügel zueinander geneigt sind, wobei alternativ jeweils Flügel eines Quadranten der zylindermantelförmigen Wand 30 in anderer Richtung geneigt sind als die Flügel benachbarter Quadranten.

Durch diese schräg angeordneten, elastischen Flügel 32 ergibt sich vorteilhafterweise eine gute Halterung des Verschlußdeckels 1''' innerhalb eines Kragenlochs in einem Träger, wobei sich ein Teil der Flügel 32 am Innenumfang des Kragenlochs und ein anderer Teil hinter dessen äußerer Kante einlagert, so daß neben einer guten Abdichtung auch eine sichere Haltewirkung und ein verbesserter Toleranzausgleich gegeben ist.

In nicht näher dargestellter Ausführungsform kann oberhalb der Flügel 32 eine umlaufende Dichtlippe vorgesehen sein, welche am Außenumfang der zylindermantelförmigen Wand 30 angeordnet ist. Diese Dichtlippe kann auf der Oberseite eines nicht näher dargestellten Trägers aufruhen und bewirkt damit eine zusätzliche Dichtwirkung.

Allen Ausführungsformen des Verschlußdeckels 1, 1', 1'' bzw. 1''' ist gemeinsam, daß sie aus einer Kernkomponente 10 und aus einer Schalenkomponente 20 bestehen. Die Außenränder 3 der Schalenkomponente 20 sind durch Hitzeeinwirkung mit der Trägerplatte verklebbar, wobei die Schalenkomponente aus einem flexiblen Material besteht.

Der erfindungsgemäße Verschlußdeckel ist im Zweikomponenten-Spritzverfahren herstellbar, so daß sich bei hoher Effektivität im dichten Abschluß eine sehr kostengünstige Herstellung ergibt.

## Patentansprüche

1. Verschlußdeckel (1, 1', 1'', 1''') zum dichten Abschluß einer Öffnung in einer Trägerplatte, insbesondere einer Kraftfahrzeugkarosserie, mit einem Kunststoffdeckelteil und einem damit verbundenen Kunststoffabdichtteil, wobei der Verschlußdeckel (1, 1', 1'', 1''') aus zwei Komponenten besteht mit einer Kernkomponente (10) aus einem harten Material und einer Schalenkomponente (20) aus einem weicheren, die Kernkomponente (10) zumindest teilweise umschließenden Material,
dadurch gekennzeichnet,
daß die Schalenkomponente (20) an Außenrändern (3) durch Hitzeeinwirkung mit der Trägerplatte verklebbar ist.

2. Verschlußdeckel nach Anspruch 1, dadurch gekennzeichnet, daß die Schalenkomponente (20) aus einem flexiblen Material besteht.

3. Verschlußdeckel nach Anspruch 1 und 2, mit einer das Deckelteil begrenzenden Dichtlippe, dadurch gekennzeichnet, daß die Dichtlippe (4, 4') aus der Schalenkomponente (20) besteht.

4. Verschlußdeckel nach Anspruch 3, mit einem an das Deckelteil anschließenden ringförmigen, die Trägeröffnung durchsetzenden Flansch, welcher einen die Trägeröffnung hintergreifenden Rastring aufweist, dadurch gekennzeichnet, daß der Rastring (6, 6') aus der Kernkomponente (10) und aus der Schalenkomponente (20) besteht.

5. Verschlußdeckel nach Anspruch 4, dadurch gekennzeichnet, daß das Deckelteil napfförmig ausgebildet ist und an den Außenrändern in den Flansch (5) mit Rastring (6) übergeht und daß der Flansch (5) endseitig durch die Dichtlippe (4) begrenzt ist (Fig. 1).

6. Verschlußdeckel nach Anspruch 4, dadurch gekennzeichnet, daß unterhalb des Deckelteils (2') der Flansch (5') mit Rastring (6') anschließt (Fig. 2).

7. Verschlußdeckel nach einem der vorhergehenden Ansprüche, gekennzeichnet durch Herstellung von Kernkomponente (10) und Schalenkomponente (20) im Zweikomponenten-Spritzverfahren.

8. Verschlußdeckel nach einem der vorhergehenden Ansprüche, dadurch gekennzeichnet, daß die Schalenkomponente (20) die Kernkomponente (10) vollkommen umschließt.

9. Verschlußdeckel nach einem der Ansprüche 1 - 7, dadurch gekennzeichnet, daß die Schalenkomponente (20) die Kernkomponente (10) teilweise umschließt.

10. Verschlußdeckel nach Anspruch 9, dadurch gekennzeichnet, daß die Schalenkomponente (20) die Kernkomponente (10) im Bereich des Außenringes (3) umschließt.

11. Verschlußdeckel nach einem der vorhergehenden Ansprüche, dadurch gekennzeichnet, daß die Kernkomponente (10) eine zylindermantelförmige Wand (30) aufweist, an deren Außenfläche (31) über dem Umfang verteilte Eingriffselemente (32) angeordnet sind (Fig. 4).

12. Verschlußdeckel nach Anspruch 11, dadurch gekennzeichnet, daß die Eingriffselemente (32) als schräg angeordnete Flügel ausgebildet sind.

13. Verschlußdeckel nach Anspruch 11 oder 12, dadurch gekennzeichnet, daß die Flügel über einen Teilbereich im spitzen Winkel zu Radiallinien der zylindermantelförmigen Wand (30) verlaufen.

14. Verschlußdeckel nach einem der Ansprüche 12 oder 13, dadurch gekennzeichnet, daß jeder Flügel (32) dreieckförmig ausgebildet ist, wobei eine Dreieckseite als innerer Endbereich (33) mit der Außenfläche der zylindermantelförmigen Wand (30) verbunden ist und die gegenüberliegende Dreieckspitze den äußeren Endbereich bildet.

15. Verschlußdeckel nach einem der Ansprüche 12 bis 14, dadurch gekennzeichnet, daß die Flügel (32) über den gesamten Umfang der zylindermantelförmigen Wand (30) in einer Richtung schräg angeordnet oder jeweils zwei Flügel zueinander geneigt sind oder jeweils Flügel eines Quadranten in anderer Richtung geneigt sind als die Flügel benachbarter Quadranten.

16. Verschlußdeckel nach einem der Ansprüche 12 bis 15, dadurch gekennzeichnet, daß unterhalb des Außenrings (3) und oberhalb der Flügel (32) ein am Außenumfang der zylindermantelförmigen Wand (30) eine Dichtlippe angeordnet ist.

## Claims

1. Closure cover (1, 1', 1'', 1''') for the leaktight closure of an opening in a support plate, in particular a motor vehicle body, with a plastic cover part and a plastic sealing part connected to the latter, the closure cover (1, 1', 1'', 1''') comprising two components, with a core component (10) composed of a hard material and a shell component (20) which is composed of a softer material and at least partially surrounds the core component (10), characterized in that the shell component (20) can be adhesively bonded to the support plate at outer rims (3) by the action of heat.

2. Closure cover according to Claim 1, characterized in that the shell component (20) is composed of a flexible material.

3. Closure cover according to Claims 1 and 2, with a sealing lip which delimits the cover part, characterized in that the sealing lip (4, 4') is constituted by the shell component (20).

4. Closure cover according to Claim 3, with an annular flange which adjoins the cover part, passes through the opening in the support and has a latching ring which engages behind the opening in the support, characterized in that the latching ring (6, 6') is made up of the core component (10) and the shell component (20).

5. Closure cover according to Claim 4, characterized in that the cover part is of cup-shaped design and merges at the outer rims into the flange (5) with the latching ring (6) and in that the flange (5) is delimited at the end by the sealing lip (4) (Fig. 1).

6. Closure cover according to Claim 4, characterized in that the cover part (2') is adjoined underneath by the flange (5') together with the latching ring (6') (Fig. 2).

7. Closure cover according to one of the preceding claims, characterized by production of the core component (10) and the shell component (20) by the two-component injection method.

8. Closure cover according to one of the preceding claims, characterized in that the shell component (20) completely surrounds the core component (10).

9. Closure cover according to one of Claims 1 - 7, characterized in that the shell component (20) partially surrounds the core component (10).

10. Closure cover according to Claim 9, characterized in that the shell component (20) surrounds the core component (10) in the region of the outer ring (3).

11. Closure cover according to one of the preceding claims, characterized in that the core component (10) has a wall (30) in the form of the lateral surface of a cylinder, on the outer surface (31) of which engagement elements (32) distributed around the circumference are arranged (Fig. 4).

12. Closure cover according to Claim 11, characterized in that the engagement elements (32) are designed as obliquely arranged wings.

13. Closure cover according to Claim 11 or 12, characterized in that the wings extend at an acute angle to radial lines of the wall (30) in the form of the lateral surface of a cylinder over a partial area.

14. Closure cover according to one of Claims 12 or 13, characterized in that each wing (32) is triangular, one side of the triangle being connected as inner end region (33) to the outer surface of the wall (30) in the form of the lateral surface of a cylinder, and the opposite point of the triangle forming the outer end region.

15. Closure cover according to one of Claims 12 to 14, characterized in that the wings (32) are arranged obliquely in one direction over the entire circumference of the wall (30) in the form of the lateral surface of a cylinder or two wings in each case are inclined relative to one another or wings of one quadrant are in each case inclined in a different direction to the wings of adjacent quadrants.

16. Closure cover according to one of Claims 12 to 15, characterized in that a sealing lip is arranged on the outer circumference of the wall (30) in the form of the lateral surface of a cylinder below the outer ring (3) and above the wings (32).

## Revendications

1. Bouchon obturateur (1, 1', 1'', 1''') pour la fermeture étanche d'un orifice pratiqué dans un panneau de support, notamment une carrosserie de véhicule automobile, comprenant une partie de recouvrement en matière plastique et une partie d'étanchement en matière plastique, reliée à la partie précitée, le bouchon obturateur (1, 1', 1'', 1''') étant constitué de deux composants, avec un composant de noyau (10) en un matériau dur et un composant d'enveloppement (20) en un matériau plus tendre, ceinturant au moins partiellement le composant de noyau (10),
caractérisé par le fait
que le composant d'enveloppement (20) peut être collé par des bords extérieurs (3) sur le panneau de support, par action thermique.

2. Bouchon obturateur selon la revendication 1, caractérisé par le fait que le composant d'enveloppement (20) consiste en un matériau flexible.

3. Bouchon obturateur selon les revendications 1 et 2, présentant une lèvre d'étanchement délimitant la partie de recouvrement, caractérisé par le fait que la lèvre d'étanchement (4, 4') est constituée du composant d'enveloppement (20).

4. Bouchon obturateur selon la revendication 3, présentant une collerette annulaire qui se rattache à la partie de recouvrement, traverse l'orifice du support et comporte une bague encliquetable emprisonnant, par-derrière, l'orifice du support, caractérisé par le fait que la bague encliquetable (6, 6') est constituée du composant de noyau (10) et du composant d'enveloppement (20).

5. Bouchon obturateur selon la revendication 4, caractérisé par le fait que la partie de recouvrement est de réalisation en forme de cuvette et fusionne, par les bords extérieurs, dans la collerette (5) munie de la bague encliquetable (6) ; et par le fait que la collerette (5) est délimitée par la lèvre d'étanchement (4) dans la zone d'extrémité (figure 1).

6. Bouchon obturateur selon la revendication 4, caractérisé par le fait que la collerette (5') munie de la bague encliquetable (6') se rattache au-dessous de la partie de recouvrement (2') (figure 2).

7. Bouchon obturateur selon l'une des revendications précédentes, caractérisé par une fabrication du composant de noyau (10) et du composant d'enveloppement (20) par le procédé d'injection à deux composants.

8. Bouchon obturateur selon l'une des revendications précédentes, caractérisé par le fait que le composant d'enveloppement (20) ceinture parfaitement le composant de noyau (10).

9. Bouchon obturateur selon l'une des revendications 1-7, caractérisé par le fait que le composant d'enveloppement (20) ceinture partiellement le composant de noyau (10).

10. Bouchon obturateur selon la revendication 9, caractérisé par le fait que le composant d'enveloppement (20) ceinture le composant de noyau (10) dans la région de l'anneau extérieur (3).

11. Bouchon obturateur selon l'une des revendications précédentes, caractérisé par le fait que le composant de noyau (10) présente une paroi (30) en forme d'enveloppe cylindrique, à la surface extérieure (31) de laquelle sont disposés des éléments (32) de venue en prise qui sont répartis sur le pourtour (figure 4).

12. Bouchon obturateur selon la revendication 11, caractérisé par le fait que les éléments (32) de venue en prise sont réalisés sous la forme d'ailettes agencées à l'oblique.

13. Bouchon obturateur selon la revendication 11 ou 12, caractérisé par le fait que les ailettes s'étendent, sur une région partielle, à angle aigu par rapport à des lignes radiales de la paroi (30) en forme d'enveloppe cylindrique.

14. Bouchon obturateur selon l'une des revendications 12 ou 13, caractérisé par le fait que chaque ailette (32) est de réalisation triangulaire, un côté du triangle, constituant une région extrême intérieure (33), étant relié à la surface extérieure de la paroi (30) en forme d'enveloppe cylindrique, et la pointe opposée du triangle formant la région extrême extérieure.

15. Bouchon obturateur selon l'une des revendications 12 à 14, caractérisé par le fait que les ailettes (32) sont agencées à l'oblique dans une direction sur tout le pourtour de la paroi (30) en forme d'enveloppe cylindrique, ou bien deux ailettes respectives sont inclinées l'une par rapport à l'autre, ou bien des ailettes respectives d'un quart de cercle sont inclinées dans une direction autre que les ailettes de quarts de cercle voisins.

16. Bouchon obturateur selon l'une des revendications 12 à 15, caractérisé par le fait qu'une lèvre d'étanchement est disposée sur le pourtour extérieur de la paroi (30) en forme d'enveloppe cylindrique, au-dessous de l'anneau extérieur (3) et au-dessus des ailettes (32).
